# EUROPÄISCHE PATENTSCHRIFT

(11) **EP 2 669 488 B1**
(45) Veröffentlichungstag und Bekanntmachung des Hinweises auf die Patenterteilung: **20.12.2023**
(21) Anmeldenummer: 13002417.7
(22) Anmeldetag: 07.05.2013
(51) Int. Cl.: F02C 1/10, F02C 7/143, F03G 7/10

(54) **EXERGIEKRAFTWERK SYSTEM ZUR DEZENTRALEN STROMERZEUGUNG**
EXERGY POWER PLANT SYSTEM FOR DECENTRALISED POWER GENERATION
SYSTÈME DE CENTRALE D'ÉNERGIE POUR LA PRODUCTION D'ÉLECTRICITÉ DÉCENTRALISÉE

(30) Priorität: 29.05.2012 DE 102012010964
(43) Veröffentlichungstag der Anmeldung: 04.12.2013
(73) Patentinhaber: Labentz, Peter Richard, 21035 Hamburg (DE)
(72) Erfinder: Labentz, Peter Richard, 21035 Hamburg (DE)
(74) Vertreter: Gerbaulet, Hannes

(56) Entgegenhaltungen:
- WO-A1-01/43272
- WO-A1-82/03894
- WO-A1-2011/138755
- FR-A- 464 785
- US-A1- 2009 032 315
- US-A1- 2009 179 424
- US-A1- 2011 138 803

## Beschreibung

Es wird ein Verfahren zur dezentralen Stromerzeugung durch Nutzung der physikalischen Energieform Überdruckenergie als Zustandsgröße und ein Exergiekraftwerk zur Durchführung des Verfahrens mittels einer Laufradturbine in einem stationären Fließprozess beschrieben.

Bekannt ist, dass Wasserkraftwerke die natürlichen Wasserkräfte mittels Laufradturbinen nutzen. Die Laufradturbinen werden überwiegend mit elektrischen Generatoren gekoppelt und zur Erzeugung elektrischer Energie verwendet. Der Nachteil derartiger Kraftwerke besteht darin, dass die natürlichen Wasserkräfte nicht mehr wesentlich ausbaufähig sind und dezentral nicht genutzt werden können.

In der DE 10 2007 012 932 A1 wird ferner ein Verfahren und ein Kraftwerk zur nachhaltigen Nutzung von Energie mittels eines Generators beschrieben. In der US 2009/0179424 A1 ist ein Verfahren zur dezentralen Stromerzeugung mittels mindestens einer Laufradturbine, insbesondere durch Nutzung der physikalischen Energieform Überdruckenergie als Zustandsgröße in einem Fließprozess, beschrieben. In der US 2009/0032315 A1 ist ein Hydraulikkolben beschrieben, der einen Gaskolben antreibt. In der FR 464 785 A ist eine wechselseitig ober- bzw. unterschlächtig beaufschlagte Turbine in Hydraulikausführung beschrieben. In der WO 2011/138755 A1 sind eine Vorrichtung und ein Verfahren zum Bestimmen einer Position eines innerhalb eines Hydraulik- oder Pneumatikzylinders zwischen einer ersten Endposition und einer zweiten Endposition hin- und hergehenden Kolbens beschrieben, wobei der Kolben den Hydraulik- oder Pneumatikzylinder in eine erste Kammer und in eine zweite Kammer unterteilt und mindestens eine der Kammern zumindest teilweise mit einem Fluid gefüllt ist.

Die Aufgabe der Erfindung besteht darin, ein Exergiekraftwerk-System aufzuzeigen, mittels dessen die Zustandsgröße Überdruckenergie mit dem Massenstrom mitgeführt, spezifische technische Arbeit leistet, die umgeformt in elektrische Energie einer technischen Nutzung zugeführt wird, wobei hohe Energieerschließungs- und Energietransportkosten entfallen.

Erfindungsgemäß erfolgt die Lösung der Aufgabe hinsichtlich des Exergiekraftwerk-Systems durch die Merkmale des Anspruchs 1. Vorteilhafte Ausgestaltungen der Erfindung werden in den abhängigen Ansprüchen beschrieben.

Die Erfindung wird nachstehend am Beispiel des in den Zeichnungen schematisch dargestellten Exergiekraftwerks näher erläutert. Es zeigt:

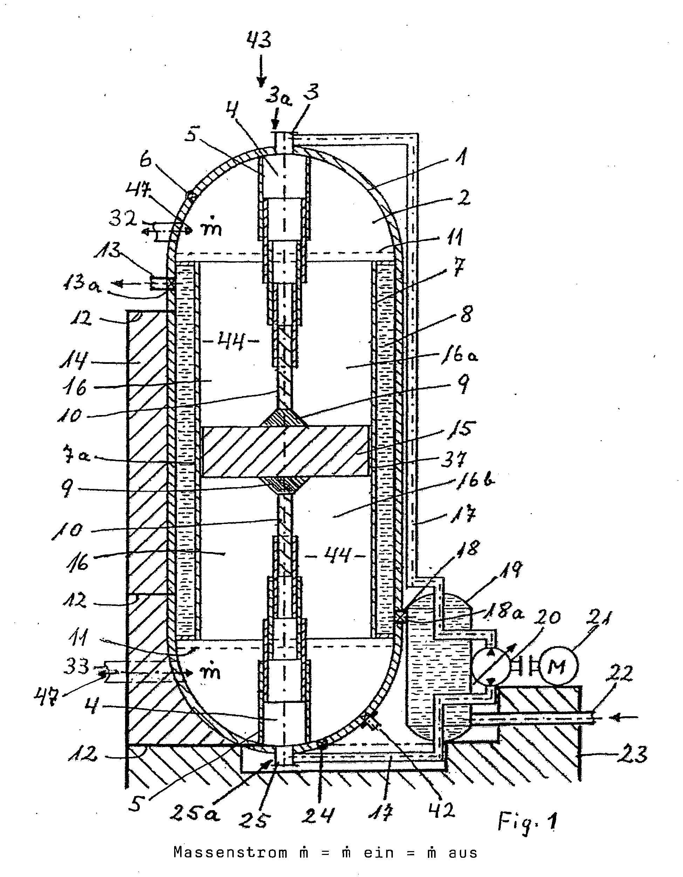

Fig.1 ein Exergiekraftwerk in einer schematischen Seitenansicht;

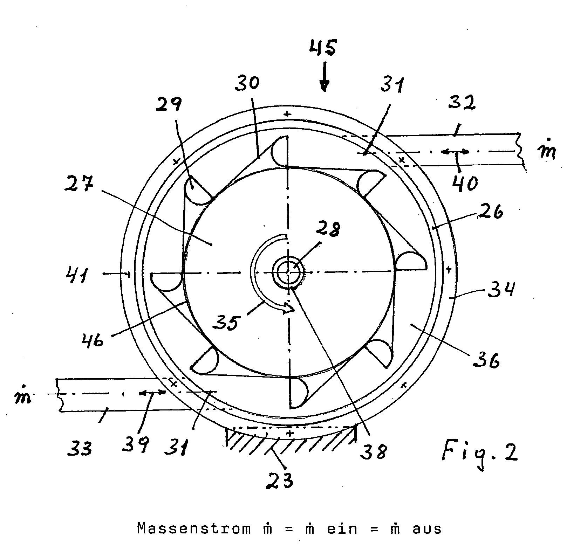

Fig.2 die Ausbildung der Laufradturbine des Exergiekraftwerks in einer schematischen Seitenansicht;

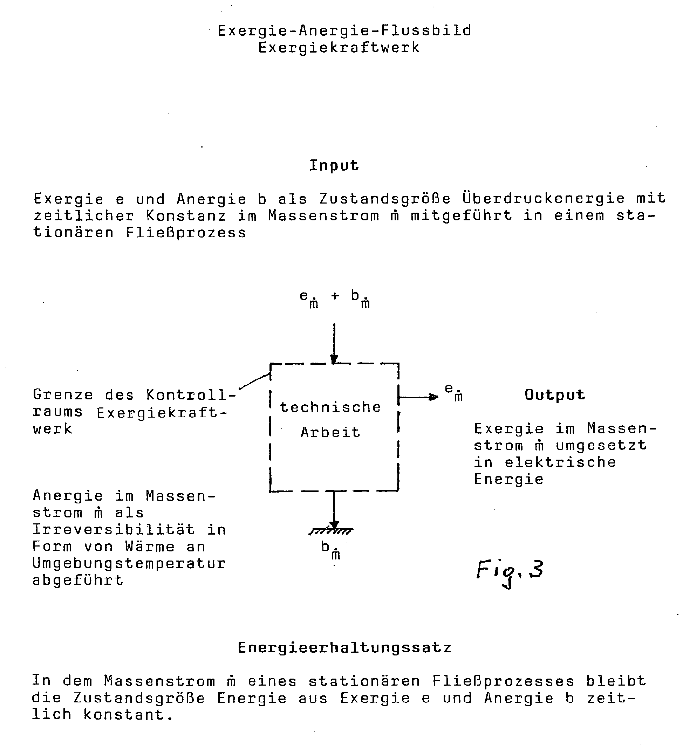

Fig.3 das Exergie-Anergie-Flussbild Exergiekraftwerk bei einem stationären Fließprozess, wobei die beanspruchte Vorrichtung im Betrieb nicht entsprechend einem stationären Fließprozess arbeitet.

Das Exergiekraftwerk 43 besteht aus einem Druckbehälter 1, in dem ein Wärmeaustauscher 8 angeordnet ist, der an seiner Zylinderkühlfläche 7a eine Laufbuchse 7 aufweist, in der der Kolben 15 einer Antriebseinrichtung 20, 21 zwischen zwei Druckstempeln 10 axial gelagert, mittels Verschiebung arbeitet. Der Kolben 15 unterteilt das Volumen im Gasraum 16 des Druckbehälters 1 in zwei volumenvariable Räume 16a, 16b. Diese weisen jeweils eine ober- oder unterschlächtige Druckleitung 32, 33 auf, die an einem Laufradgehäuse 45 entgegengesetzt angeordnet, mit Laufradturbinen 27 in Wirkverbindung stehen.

Das Exergiekraftwerk 43 über den Kompressoranschluss 42, mittels eines Verdichters mit der Masse einer bestimmten Gasmenge -44- befüllt, bleibt im Inneren des Systems 43 als Zustandsgröße in Form von Überdruckenergie mit zeitlicher Konstanz erhalten.

Die Zustandsgröße Überdruckenergie in Wirkverbindung mit einer Antriebseinrichtung 20, 21, mittels Druckkraftübersetzung und durch Druckkraftausgleich in den volumenvariablen Räumen 16a, 16b, in einem stationären Fließprozess, wobei die beanspruchte Vorrichtung im Betrieb nicht entsprechend einem stationären Fließprozess arbeitet. Die Zustandsgröße Überdruckenergie wird mit dem Massenstrom in einem Laufradgehäuse 45 mitgeführt. Die Laufradturbinen 27 werden ober- oder unterschlächtig beaufschlagt, um spezifische technische Arbeit in Wellenarbeit umzusetzen.

Die Laufradturbinen 27 sind mit elektrischen Generatoren gekoppelt, um Strom zu erzeugen, der dann, mittels einer Stromleitung transportiert, einer technischen Nutzung zugeführt wird.

Der Energiebetrag der Antriebseinrichtung 20, 21 wird in dem stationären Fließprozess irreversibel mitgeführt und als Anergie b in Form von Wärme an die Umgebungstemperatur abgeführt, wobei die beanspruchte Vorrichtung im Betrieb nicht entsprechend einem stationären Fließprozess arbeitet und der Energiebetrag der Antriebseinrichtung nicht komplett in Form von Wärme an die Umgebung abgeführt wird.

Die grundlastfähige und unbeschränkte Umformbarkeit der physikalischen Energieform Überdruckenergie in elektrische Energie ermöglicht die energieautarke Fabrikation und kann als Antriebsenergie in der Seeschifffahrt und in der Luft- und Raumfahrt von großem Nutzen sein.

### Bezugzeichenliste

- 1: Druckbehälter
- 2: Arbeitsgas
- 3: Anschluss
- 4: Fluidspeicher
- 5: Druckübersetzer
- 6: Sicherheitsventil
- 7: Laufbuchse
- 7a: Zylinderkühlfläche
- 8: Wärmeaustauscher
- 9: Druckstempellager
- 10: Druckstempel der Antriebseinrichtung
- 11: Flansch
- 12: Halterung
- 13: Kühlmittelaustritt
- 13a: Druckausgleichsventil
- 14: Stützblech
- 15: Kolben
- 16: unterteilter Gasraum
- 16a, 16b: volumenvariable Gasräume
- 17: Hydraulik-Arbeitsleitung
- 18: Strömungsleitung
- 18a: Druckausgleichsventil
- 19: Fluidkühler
- 20: Hydraulik-Verstellpumpe
- 21: Elektromotor der Antriebseinrichtung
- 22: Kühlmitteleintritt
- 23: Bauplattform
- 24: Ablassventil
- 25: Anschluss
- 25a: Ablassventil
- 26: Laufradzylinder
- 27: Laufradturbine
- 28: Laufradwelle
- 29: becherartige Schaufel
- 30: Stütz- und Leitblech
- 31: Rohrdüse
- 32: oberschlächtige Druckleitung
- 33: unterschlächtige Druckleitung
- 34: Zylinderdeckelflansch
- 35: Drehrichtung
- 36: Ringkanal
- 37: Kolbenring
- 38: Generator-Kupplungswelle
- 39: umkehrbarer Massenstrom m
- 40: umkehrbarer Massenstrom m
- 41: Flanschbohrung
- 42: Kompressoranschluss
- 43: Exergiekraftwerk
- -44-: Gasmenge im System als Zustandsgröße mit zeitlicher Konstanz in Form von Überdruckenergie
- 45: Laufradgehäuse
- 46: Laufrad
- 47: umkehrbarer Massenstrom m

## Patentansprüche

1. Exergiekraftwerk-System (43) physikalischer Überdruckenergie E/m, die in Form einer bestimmten Gasmenge (-44-) mit zeitlicher Konstanz im System (43), als Exergie-Anteil nutzbar ist,
wobei das Exergiekraftwerk eine Hydraulik-Antriebseinrichtung (20, 21), Hydraulik-Druckstempel (10), einen Gasraum (16), einen Kolben (15), ober- und unterschlächtige Druckleitungen (32, 33), mindestens ein Laufradgehäuse (45), mindestens eine Laufradturbine (27) mit einem Laufrad (46), an dessen Umfang becherartige oder halbkugelförmige Schaufeln (29) angeordnet sind, und elektrische Generatoren beinhaltet,
wobei die Druckenergie in Wirkverbindung mit der Hydraulik-Antriebseinrichtung (20, 21) steht, wobei die Gasmenge (-44-) im Gasraum (16) durch den mittels Verschiebung des Hydraulik-Druckstempels (10) bewegten Kolben (15) in zwei volumenvariable Gasräume (16a, 16b) unterteilt ist,
wobei die Gasmenge (-44-) durch Druckausgleich im System (43) auf umkehrbarem Weg bewegt wird,
wobei die Überdruckenergie, durch die ober- und unterschlächtigen Druckleitungen (32, 33) geführt, das mindestens eine Laufradgehäuse (45) wechselseitig durchströmt und die mindestens eine Laufradturbine (27) ober- oder unterschlächtig beaufschlagt,
wodurch die Überdruckenergie spezifische technische Arbeit leistet, die, an einer Laufradwelle (28) zugeführt, in Wellenarbeit umgesetzt, mit den elektrischen Generatoren gekoppelt, Strom erzeugt, der dann einer technischen Nutzung zugeführt wird.

2. Exergiekraftwerk-System (43) nach Anspruch 1, **dadurch gekennzeichnet, dass** in einem Druckbehälter (1) ein Wärmeaustauscher (8) angeordnet ist, der an seiner Zylinderkühlfläche (7a) eine Laufbuchse (7) aufweist, in der der Kolben (15) zwischen den zwei Hydraulik-Druckstempeln (10) im Gasraum (16) des Druckbehälters (1) axial verschieblich gelagert ist.

3. Exergiekraftwerk-System (43) nach Anspruch 2, **dadurch gekennzeichnet, dass** das Arbeitsgas (2) der Gasmenge (-44-) ein Kühlmittel ist, das an der Zylinderkühlfläche (7a) des Wärmeaustauschers (8) zurückkühlt, der die übertragene Wärme an die Umgebungstemperatur (t_{U}) abgibt.

4. Exergiekraftwerk-System (43) nach einem der vorherigen Ansprüche, **dadurch gekennzeichnet, dass** die volumenvariablen Gasräume (16a bzw. 16b) jeweils eine der Druckleitungen (32 bzw. 33) aufweisen, die am Laufradgehäuse (45) ober- bzw. unterschlächtig entgegengesetzt angeordnet sind.

5. Exergiekraftwerk-System (43) nach einem der vorherigen Ansprüche, **dadurch gekennzeichnet, dass** die volumenvariablen Räume (16a, 16b), mittels wechselseitiger Verschiebung im Inneren des Systems (43), mit der mindestens einen Laufradturbine (27) in Wirkverbindung stehen, die, mittels einer die Wellenarbeit vermittelnden Wellenkupplung (38), mit den elektrischen Generatoren gekoppelt sind.

6. Exergiekraftwerk-System (43) nach einem der vorherigen Ansprüche, **dadurch gekennzeichnet, dass** in einem Ringkanal (36) des Laufradgehäuses (45) die mindestens eine Laufradturbine (27) mit der Laufradwelle (28) gelagert ist.

## Claims

1. Exergy power plant system (43) of physical overpressure energy E/m, which is usable in the form of a certain gas quantity (-44-) with temporal constancy in the system (43), as exergy portion,
wherein the exergy power plant includes a hydraulic drive device (20, 21), hydraulic pressure rams (10), a gas space (16), a piston (15), upstream and downstream pressure lines (32, 33), at least one impeller casing (45), at least one impeller turbine (27) with an impeller (46) with cup-like or hemispherical blades (29) arranged on the periphery thereof, and electric generators, wherein the pressure energy is operatively connected to the hydraulic drive device (20, 21), wherein the gas quantity (-44-) in the gas space (16) is divided into two volume-variable gas spaces (16a, 16b) by the piston (15) moved by means of displacement of the hydraulic pressure ram (10),
wherein the gas quantity (-44-) is moved in a reversible way by pressure compensation in the system (43),
wherein the overpressure energy, conducted through the upstream and downstream pressure lines (32, 33), flows alternately through the at least one impeller housing (45) and acts on the at least one impeller turbine (27) in an upstream or downstream manner,
as a result of which the overpressure energy performs specific technical work which, supplied to an impeller shaft (28), is converted into shaft work, coupled to the electrical generators, generates electricity which is then supplied for technical use.

2. Exergy power plant system (43) according to claim 1, **characterized in that** in a pressure vessel (1) a heat exchanger (8) is arranged, which on its cylinder cooling surface (7a) has a liner (7), in which the piston (15) is mounted in an axially displaceable manner between the two hydraulic pressure rams (10) in the gas space (16) of the pressure vessel (1).

3. Exergy power plant system (43) according to claim 2, **characterized in that** the working gas (2) of the gas quantity (-44-) is a coolant which cools back at the cylinder cooling surface (7a) of the heat exchanger (8) which releases the transferred heat to the ambient temperature (tᵤ ).

4. Exergy power plant system (43) according to one of the preceding claims, **characterized in that** the variable-volume gas spaces (16a and 16b, respectively) each have one of the pressure lines (32 and 33, respectively) which are arranged on the impeller housing (45) in an upstream and downstream opposite manner, respectively.

5. Exergy power plant system (43) according to one of the previous claims, **characterized in that** the variable-volume spaces (16a, 16b) are operatively connected, by means of mutual displacement in the interior of the system (43), to the at least one impeller turbine (27), which is coupled, by means of a shaft coupling (38) imparting the shaft work, to the electric generators.

6. Exergy power plant system (43) according to one of the previous claims, **characterized in that** the at least one impeller turbine (27) is mounted with the impeller shaft (28) in an annular channel (36) of the impeller housing (45).

## Revendications

1. Système de centrale d'exergie (43) d'énergie physique de surpression E/m, qui est utilisable sous forme d'une certaine quantité de gaz (-44-) avec une constance temporelle dans le système (43), comme part d'exergie, la centrale d'exergie comprenant un dispositif d'entraînement hydraulique (20, 21), des pistons de pression hydrauliques (10), une chambre à gaz (16), un piston (15), des conduites sous pression (32, 33) en amont et en aval, au moins un carter de roue mobile (45), au moins une turbine à roue mobile (27) avec une roue mobile (46) sur la périphérie de laquelle sont disposées des aubes (29) en forme de godet ou de demi-sphère, et des générateurs électriques, l'énergie de pression étant en liaison active avec le dispositif d'entraînement hydraulique (20, 21),
la quantité de gaz (-44-) dans la chambre à gaz (16) étant divisée en deux chambres à gaz à volume variable (16a, 16b) par le piston (15) déplacé par le déplacement du piston de pression hydraulique (10), la quantité de gaz (-44-) étant déplacée par compensation de pression dans le système (43) selon un trajet réversible, l'énergie de surpression, guidée par les conduites de pression en amont et en aval (32, 33), traversant alternativement l'au moins un carter de roue (45) et alimentant l'au moins une turbine de roue (27) en amont ou en aval, ce qui fait que l'énergie de surpression fournit un travail technique spécifique qui, amené à un arbre de roue (28), est converti en travail ondulatoire, couplé aux générateurs électriques, produit du courant qui est ensuite acheminé vers une utilisation technique.

2. Système de centrale d'exergie (43) selon la revendication 1, **caractérisé en ce que** dans un réservoir sous pression (1) est disposé un échangeur de chaleur (8) qui présente sur sa surface de refroidissement cylindrique (7a) une chemise (7) dans laquelle le piston (15) est logé de manière à pouvoir se déplacer axialement entre les deux pistons hydrauliques sous pression (10) dans la chambre à gaz (16) du réservoir sous pression (1).

3. Système de centrale d'exergie (43) selon la revendication 2, **caractérisé en ce que** le gaz de travail (2) de la quantité de gaz (-44-) est un fluide de refroidissement qui se refroidit sur la surface de refroidissement cylindrique (7a) de l'échangeur de chaleur (8) qui cède la chaleur transférée à la température ambiante (tᵤ ).

4. Système de centrale d'exergie (43) selon l'une des revendications précédentes, **caractérisé en ce que** les chambres à gaz à volume variable (16a ou 16b) comportent chacune l'une des conduites de pression (32 ou 33) qui sont disposées de manière opposée sur le corps de roue (45) en amont ou en aval.

5. Système de centrale d'exergie (43) selon l'une des revendications précédentes, **caractérisé en ce que** les espaces à volume variable (16a, 16b) sont en liaison active, par un déplacement mutuel à l'intérieur du système (43), avec l'au moins une turbine de roue (27) qui est couplée aux générateurs électriques au moyen d'un accouplement d'arbres (38) transmettant le travail des arbres.

6. Système de centrale d'exergie (43) selon l'une des revendications précédentes, **caractérisé en ce que** l'au moins une turbine de roue (27) est logée avec l'arbre de roue (28) dans un canal annulaire (36) du boîtier de roue (45).
